(19) Europäisches Patentamt
European Patent Office
Office européen des brevets

(11) **EP 4 324 855 A1**

(12) **EUROPEAN PATENT APPLICATION**
published in accordance with Art. 153(4) EPC

(43) Date of publication:
**21.02.2024 Bulletin 2024/08**

(51) International Patent Classification (IPC):
**C08F 2/44** (2006.01)  **C08F 2/50** (2006.01)
**C08F 290/06** (2006.01)  **G02F 1/1339** (2006.01)
**G09F 9/30** (2006.01)

(21) Application number: **22788180.2**

(22) Date of filing: **13.04.2022**

(52) Cooperative Patent Classification (CPC):
**C08F 2/44; C08F 2/50; C08F 290/06; G02F 1/1339; G09F 9/30**

(86) International application number:
**PCT/JP2022/017677**

(87) International publication number:
**WO 2022/220257 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2021 JP 2021068732**

(71) Applicant: **Dexerials Corporation**
**Shimotsuke-shi, Tochigi 323-0194 (JP)**

(72) Inventors:
• **TOMOBE Akira**
**Shimotsuke-shi, Tochigi 323-0194 (JP)**
• **WAKAIRO Masakatsu**
**Shimotsuke-shi, Tochigi 323-0194 (JP)**
• **NAKATA Yoshiaki**
**Shimotsuke-shi, Tochigi 323-0194 (JP)**

(74) Representative: **Müller-Boré & Partner**
**Patentanwälte PartG mbB**
**Friedenheimer Brücke 21**
**80639 München (DE)**

(54) **PHOTOCURABLE MATERIAL AND IMAGE DISPLAY DEVICE**

(57) A photocurable material is for forming a dam portion of an image display device in which an image display panel and a front panel are layered via a transparent resin layer composed of a fill portion and the dam portion surrounding an outer periphery of the fill portion. The photocurable material includes a component (a) being a photopolymerizable acrylate monomer component including a hydroxy group-containing (meth)acrylate monomer, a component (b) being a photopolymerizable acrylate oligomer component including a (meth)acrylate oligomer having a relative dielectric constant of 4.0 or more at 100 kHz, a component (c) being a plasticizer, a component (d) being a photopolymerization initiator, and a component (e) being hexadecylsilylated silica. The photocurable material has a thixotropic ratio of 2 or more and 5 or less, where the thixotropic ratio is a numeric value obtained by, when a viscosity is measured using a Brookfield viscometer, dividing the viscosity at a rotational speed of 1 rpm at 25°C by the viscosity at a rotational speed of 10 rpm at 25°C.

Fig. 1

EP 4 324 855 A1

**Description**

Technical Field

The present invention relates to a photocurable material and an image display device.

Background Art

A general image display device has a structure in which a front panel and an image display panel are layered via a transparent resin layer. Herein, the image display panel includes a polarizing plate on its surface and the outer periphery of the transparent resin layer is surrounded by a dam portion. This structure is formed as follows (Patent Literature 1): a photocurable material, which is for a dam, has a relatively high viscosity, and exhibits a predetermined thixotropic property, is applied to the outer edge of the image display panel or the front panel to form a dam portion. Then, a UV-curing photocurable material, which is for filling and has a relatively low viscosity, is applied to a region that is surrounded by the dam portion. After that, the image display panel and the front panel are bonded together, followed by a photocuring treatment, to form the structure described above. A thixotropy imparting agent such as silica is added to the photocurable material for a dam so as to impart a predetermined thixotropic property thereto.

However, when an image display device having the structure such as that described in Patent Literature 1 is mounted in a vehicle, a polarizing plate may be discolored when left under a high-temperature environment while the vehicle is parked outdoors in the summer. Thus, it has been proposed to impart a relatively good moisture permeability to a transparent resin layer in contact with a polarizing plate (Patent literature 2). It is speculated that, if the transparent resin layer has a high moisture permeability, moisture that is generated from the polarizing plate under a high-temperature environment can easily pass through the transparent resin layer and be discharged outside the image display device. As a result, the discoloration of the polarizing plate would be prevented.

Thus, it is considered that, when the image display device in Patent Literature 1 is applied to in-vehicle use, a highly polar photocurable material is adopted as a constituent resin material of the photocurable material for a dam and of the photocurable material for filling in Patent Literature 1.

Citation List

Patent Literature

PTL 1: Japanese Patent Application Laid-Open No. 2013-088455
PTL 2: Japanese Patent Application Laid-Open No. 2018-021962

Summary of Invention

Technical Problem

However, when a highly polar photocurable material is applied as the photocurable material for a dam and the photocurable material for filling in Patent Literature 1, although the discoloration of the polarizing plate in contact with the transparent resin layer, which is a photocured product of such a photocurable material, is prevented, there is a problem that the necessary thixotropic property cannot be obtained when the photocurable material for a dam is applied in a dam shape. Furthermore, there is a problem that the transparency of the photocured product decreases.

An object of the present invention is to solve the above-mentioned conventional problems and to impart a desired thixotropic property and transparency to a photocurable material for a dam used for producing an image display device even if a highly polar photocurable material that can ensure a good post-curing moisture permeability is applied as the photocurable material for a dam.

Solution To Problem

The present inventors have found that the object of the present invention can be achieved by using, as a photocurable material for a dam used for producing an image display device, a material having a specific composition and exhibiting a predetermined thixotropic ratio. Furthermore, the present inventors have found that the object of the present invention can be achieved at a higher level by using hexadecylsilylated silica fine particles as a thixotropy imparting agent, thereby completing the present invention.

That is, the present invention provides a photocurable material for forming a dam portion of an image display device in which an image display panel and a front panel are layered via a transparent resin layer composed of a fill portion and the dam portion surrounding an outer periphery of the fill portion, the photocurable material including a component (a), a component (b), a component (c), a component (d), and a component (e) described below and having a thixotropic ratio of 2 or more and 5 or less, where the thixotropic ratio is a numeric value obtained by, when a viscosity is measured using a Brookfield viscometer, dividing a viscosity at a rotational speed of 1 rpm at 25°C by a viscosity at a rotational speed of 10 rpm at 25°C.

The component (a) being a photopolymerizable acrylate monomer component including a hydroxy group-containing (meth)acrylate monomer;

the component (b) being a photopolymerizable acrylate oligomer component including a (meth)acrylate oligomer having a relative dielectric constant of 4.0 or more at 100 kHz;
the component (c) being a plasticizer;
the component (d) being a photopolymerization initiator; and
the component (e) being hexadecylsilylated silica.

Furthermore, the present invention provides an image display device in which an image display panel and a front panel are layered via a transparent resin layer composed of a fill portion and a dam portion surrounding an outer periphery of the fill portion. This image display device is characterized in that the dam portion is obtained by photocuring a photocurable material which includes the above-mentioned component (a), component (b), component (c), component (d), and component (e) and has a thixotropic ratio of 2 or more and 5 or less, where the thixotropic ratio is a numeric value obtained by, when a viscosity is measured using a Brookfield viscometer, dividing the viscosity at a rotational speed of 1 rpm at 25°C by the viscosity at a rotational speed of 10 rpm at 25°C.

Advantageous Effects of Invention

The photocurable material of the present invention includes a highly polar resin material with the specified chemical composition and exhibits the predetermined thixotropic ratio. The photocurable material makes it easy to maintain the shape of the dam portion during the production of the image display device, allows a predetermined amount of the photocurable material for filling to be held inside the dam portion, and enables the dam portion to maintain a good light transmission property after photocuring. In particular, when the hexadecylsilylated silica fine particles are used as the silica of the component (e), a shape retention property of the dam can be improved, and impairment of the light transmission property after photocuring can be prevented. Furthermore, in the image display device produced by using the photocurable material of the present invention for forming the dam, discoloration of the polarizing plate can be prevented even if the image display device is left under a high-temperature environment.

Brief Description of Drawings

[Fig.1] Fig. 1 is a schematic cross-sectional view of one aspect of an image display device of the present invention.
[Fig. 2] Fig. 2 is a schematic cross-sectional view of another aspect of the image display device of the present invention. Description Of Embodiments

A photocurable material of the present invention will be described below with reference to an image display device of the present invention.

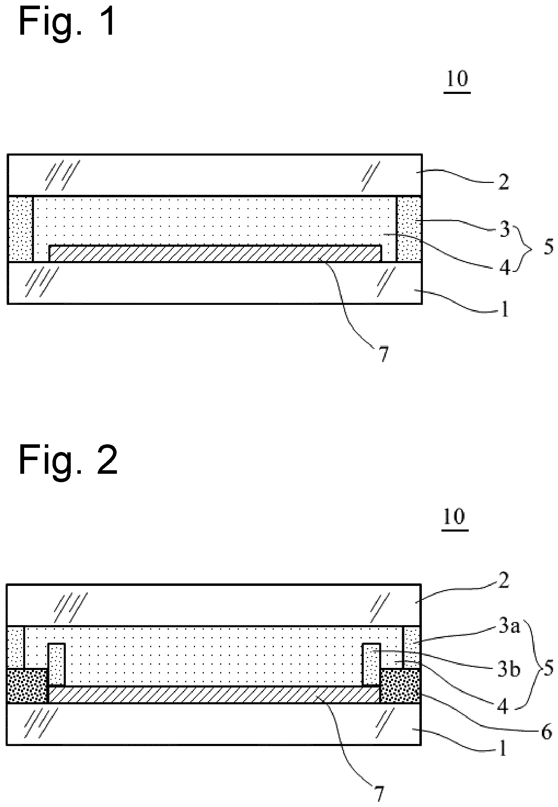

Fig. 1 is a schematic cross-sectional view of one aspect of an image display device 10 of the present invention. This image display device 10 has a structure in which an image display panel 1 and a front panel 2 are layered via a transparent resin layer 5 composed of a dam portion 3 and a fill portion 4 that is surrounded by the dam portion 3. Furthermore, Fig. 2 is a schematic cross-sectional view of another aspect of the image display device 10 of the present invention. This image display device 10 has a structure in which the image display panel 1 and the front panel 2 are layered via the transparent resin layer 5 that is disposed inside a metal bezel 6. The transparent resin layer 5 is composed of a dam portion 3a provided on the metal bezel 6, a dam portion 3b provided at a boundary between the metal bezel 6 and a polarizing plate 7, and the fill portion 4 provided inside the dam portions 3a and 3b. The photocurable material of the present invention is used to form the dam portions 3, 3a, and 3b. Note that the polarizing plate 7 is disposed on a surface of the image display panel on a side of the transparent resin layer 5. Note that the image display device of the present invention is not limited to the aspects in Fig. 1 and Fig. 2.
As described above, the photocurable material of the present invention is a photocurable material for forming the dam portion of the image display device, this device containing the image display panel and the front panel that are layered via the transparent resin layer composed of the dam portion and the fill portion that is surrounded by the dam portion, as shown Fig. 1 and Fig. 2. The photocurable material includes the following component (a), component (b), component (c), component (d), and component (e) and has a thixotropic ratio of 2 or more and 5 or less, where the thixotropic ratio is a numeric value obtained by, when a viscosity is measured using a Brookfield viscometer, dividing the viscosity at a rotational speed of 1 rpm at 25°C by the viscosity at a rotational speed of 10 rpm at 25°C. Starting with the component (a), the components will be described in order.

<Component (a)>

The photocurable material of the present invention contains a photopolymerizable acrylate monomer component as a photocurable component of the photocurable material. The photopolymerizable acrylate monomer component contains a hydroxy group-containing (meth)acrylate monomer in order to impart high polarity to the photocurable material and to increase the moisture permeability of the cured product of the photocurable material. The hydroxy group-containing (meth)acrylate monomer may contain two or more hydroxy groups, but preferably has one hydroxy group from the viewpoint of avoiding a decrease in water resistance and adhesive strength of the photocured product. It should be noted that the term "(meth)acrylate" includes methacrylate and acrylate.

Examples of the hydroxy group-containing (meth)acrylate monomer include a hydroxyalkyl (meth)acrylate monomer. Herein, the number of carbon atoms in the alkyl group is not particularly limited, but generally C1 to 12, preferably C1 to 6. Specific examples of the alkyl groups include methyl, ethyl, propyl, isopropyl, butyl, isobutyl, sec-butyl, tert-butyl, pentyl, hexyl, 2-ethylbutyl, and the like. Specific examples of hydroxyalkyl (meth)acrylate monomers include 2-hydroxyethyl (meth)acrylate, 1-hydroxyethyl (meth)acrylate, 2-hydroxypropyl (meth)acrylate, 3-hydroxypropyl (meth)acrylate, 1-hydroxypropyl (meth)acrylate, 4-hydroxybutyl (meth)acrylate, and phenyl glycidyl ether (meth)acrylate. Among these, 2-hydroxyethyl (meth)acrylate and especially 4-hydroxybutyl (meth)acrylate are preferable from the viewpoint of efficiently enhancing the moisture permeability of the photocured product of the photocurable material.

The content of the hydroxy group-containing (meth)acrylate monomer in the photopolymerizable acrylate monomer component of the component (a) is preferably 25% by mass or more, more preferably 50% by mass or more, and may be 100% by mass, in order to increase the moisture permeability of the cured product of the photocurable material.

The photopolymerizable acrylate monomer component of the component (a) may contain a (meth)acrylate monomer that does not contain a hydroxy group as long as the advantageous effects of the invention are not impaired. Examples of the (meth)acrylate monomer that does not contain a hydroxy group include an alkyl (meth)acrylate monomer, a cycloalkyl or bicycloalkyl (meth)acrylate monomer, and a heterocycloalkyl or heterobicycloalkyl (meth)acrylate monomer. Preferred examples of the alkyl (meth)acrylate monomer include an isostearyl acrylate monomer and a lauryl acrylate monomer. Preferred examples of the cycloalkyl or bicycloalkyl (meth)acrylate monomer include an isobornyl acrylate monomer. Preferred examples of the heterocycloalkyl or heterobicycloalkyl (meth)acrylate monomer include a morpholyl acrylate monomer.

The content of the photopolymerizable acrylate monomer component of the component (a) in the photocurable material is preferably 20% by mass or more and 40% by mass or less, and more preferably 25% by mass or more and 35% by mass or less. This range is preferred because if the content is too small, it is difficult to impart a viscosity appropriate for handling to the photocurable material, and if it is too large, there is a concern that shrinkage of the photocurable material will be too great when cured.

<Component (b)>

The photocurable material of the present invention contains a photopolymerizable acrylate oligomer component as the component (b). Such a photopolymerizable acrylate oligomer component is a photopolymerizable component and contains a (meth)acrylate oligomer that has a relative dielectric constant of 4.0 or more at 100 kHz. When the relative dielectric constant is less than 4.0, the moisture permeability of the cured product of the photocurable material tends to be too low. The relative dielectric constant can be measured by a commonly used LCR meter.

Preferred examples of the (meth)acrylate oligomer that has a relative dielectric constant of 4.0 or more at 100 kHz include a polyether-based urethane acrylate oligomer, a polyester-based urethane oligomer, and a polyvalent hydroxy group-containing oligomer. Among these, a polyether-based urethane acrylate oligomer is preferable from the viewpoint that good moisture permeability would be imparted to the cured product of the photocurable material.

In addition, the photopolymerizable acrylate oligomer component of the component (b) preferably has properties as a crosslinking component, from the viewpoint of the adhesiveness and reactivity of the photocurable material. Thus, it is preferable that the photopolymerizable acrylate oligomer component be polyfunctional, preferably bifunctional, that is, have two (meth)acryloyl groups. Therefore, a bifunctional polyether-based urethane acrylate oligomer is particularly preferred as the (meth)acrylate oligomer that has a relative dielectric constant of 4.0 or more at 100 kHz in the component (b).

The weight-average molecular weight of the photopolymerizable acrylate oligomer component of the component (b) is preferably 20,000 or more and 50,000 or less, more preferably 30,000 or more and 40,000 or less. This range is preferred because if the weight-average molecular weight is too small, the cured product of the photocurable material becomes too hard and display unevenness may occur when the material is used in a display device, and if it is too large, there is a concern that a viscosity appropriate for handling cannot be imparted to the photocurable material. The weight-average molecular weight can be measured using a commonly used gel-permeation chromatography device (GPC device). In addition, the viscosity thereof is preferably 20,000 mPa·s or more and 60,000 mPa·s or less at 60°C, and more preferably 30,000 mPa·s or more and 50,000 mPa·s or less. This range is preferred because if the viscosity is too low, the cured product of the photocurable material becomes too hard and display unevenness may occur when the material is used in a display device, and if it is too high, there is a concern that a viscosity appropriate for handling cannot be imparted to the photocurable material. Viscosity can be measured using a commonly used Brookfield viscometer. The glass transition temperature thereof is preferably -30°C or higher and 10°C or lower, and more preferably -20°C or higher and 0°C or lower, This range is preferred because if the glass transition temperature is too low, a favorable adhesiveness cannot be imparted to the photocurable material, and if it is too high, the cured product of the photocurable material becomes too hard and display unevenness tends to occur when the material is used in a display device. Glass transition temperature can be measured using a commonly used differential scanning calorimeter.

The content of the (meth)acrylate oligomer that has a relative dielectric constant of 4.0 or more at 100 kHz in the photopolymerizable acrylate oligomer component of the component (b) is preferably 20% by mass or more and 40% by mass or less, and more preferably 20% by mass or more and 30% by mass or less from the viewpoint of adhesiveness and reactivity of the photocurable material.

The content of the photopolymerizable acrylate oligomer of the component (b) in the photocurable material is preferably 20% by mass or more and 40% by mass or less, and more preferably 20% by mass or more and 30% by mass or less. This range is preferred because if the content is too small, a sufficient adhesive force cannot be imparted to the photocurable material, and if it is too large, there is a concern that a viscosity appropriate for handling cannot be imparted to the photocurable material.

<Component (c)>

The photocurable material of the present invention contains a plasticizer as the component (c). The plasticizer itself does not photocure by light irradiation, but imparts flexibility to the photocured product of the material. From the viewpoint of compatibility with other components, such a plasticizer preferably contains one of a polyether-based polyol and a polyester-based polyol. Among these, a polyether-based polyol is more preferably contained.

As the polyether-based polyol, for example, a general polyether-based polyol can be used. Such a general polyether-based polyol can be obtained by addition polymerization of an alkylene oxide to an initiator such as an ethylene glycol, a propylene glycol, a glycerin, or a trimethylolpropane. The alkylene oxide is not particularly limited, and examples thereof include an ethylene oxide, a propylene oxide, and a butylene oxide. Particularly preferred polyether-based polyols include a polypropylene glycol.

Examples of commercially available products of the polyether-based polyols include "ADEKA POLYETHER" manufactured by ADEKA CORPORATION. More specific examples thereof include "P series" which is a polypropylene glycol, "BPX series" which is a polypropylene glycol adduct of bisphenol A, "G series" which is a polypropylene glycol adduct of glycerin, "T series" which is a polypropylene glycol adduct of trimethylolpropane, "EDP series" which is a polypropylene glycol adduct of ethylenediamine, "SP series" which is a polypropylene glycol adduct of sorbitol, "PR series" which is a random copolymer of ethylene oxide and propylene oxide, and "CM series" which is obtained by adding a propylene oxide-ethylene oxide block copolymer to propylene glycol.

The number-average molecular weight of the polyether-based polyol is, for example, preferably 500 or more and 8,000 or less, and more preferably 1,000 or more and 5,000 or less. The number-average molecular weight can be measured using a GPC device.

As the polyester-based polyol, for example, a general polyester-based polyol obtained by condensation polymerization of a dicarboxylic acid and a diol can be used. Examples of the dicarboxylic acid include an aliphatic carboxylic acid such as adipic acid, azelaic acid, sebacic acid, and dodecanedioic acid; and an aromatic carboxylic acid such as terephthalic acid and isophthalic acid. Examples of the diol include a linear diol such as ethylene glycol, 1,4-butanediol, 1,6-hexanediol, 1,9-nonanediol, and diethylene glycol, 1,2-propylene glycol, 1,3-butylene glycol, 2-methyl-1,3-propanediol, neopentyl glycol, 3-methyl-1,5-pentadiol, 2,2-dimethyl-1,3-propanediol, and 2-methyl-1,8-octanediol.

Examples of commercially available products of the polyester-based polyol include "P-1010", "P-2010", "P-3010" and "P-2050" (manufactured by Kuraray Co., Ltd.), "OD-X-102", "OD-X-668" and "OD-X-2068" (manufactured by DIC Corporation), and "NS-2400", "YT-101", "F7-67", "#50", "F1212-29", "YG-108", "V14-90" and "Y65-55" (manufactured by ADEKA CORPORATION).

The number-average molecular weight of the polyester-based polyol is preferably 500 or more and 8,000 or less, and more preferably 1,000 or more and 5,000 or less. This range is preferred because if the number-average molecular weight of the polyester-based polyol is too small, exudation may occur from the cured product of the photocurable material, and if it is too large, there is a concern that a viscosity appropriate for handling cannot be imparted to the photocurable material.

The content of the plasticizer of the component (c) in the photocurable material is preferably 30% by mass or more and 60% by mass or less, and more preferably 40% by mass or more and 50% by mass or less. This range is preferred because if the content is too small, a sufficient flexibility required in the case of applying the cured product of the photocurable material as a binder for an image display device cannot be obtained, and if it is too large, there is a concern that a sufficient adhesive force cannot be imparted to the photocurable material.

<Component (d)>

The photocurable material of the present invention contains, as the component (d), a photopolymerization initiator depending on the polymerization method. Among these, the photocurable material preferably contains a photoradical polymerization initiator from the viewpoint of imparting high reactivity to the photocurable material. It is more preferable that the photocurable material contain, as the photoradical polymerization initiator, at least one type of an alkylphenone-based photopolymerization initiator and an acylphosphine oxide-based photopolymerization initiator. As the alkylphenone-based photopolymerization initiator, 1-hydroxycyclohexyl phenyl ketone (Irgacure 184, manufactured by BASF Japan Ltd.), 2-hydroxy-1-{4-[4-(2-hydroxy-2-methyl-propylonyl)benzyl]phenyl}-2-methyl-1-propan-1-one (Irgacure 127, manufactured by BASF Japan Ltd.) or the like can be used. As the acylphosphine oxide-based photopolymerization initiator, diphenyl(2,4,6-trimethylbenzoyl)phosphine oxide (Omnirad TPO H, manufactured by IGM Resins B.V.) or the like can be used. Besides, benzophenone, acetophenone, or the like can also be used as the photopolymerization initiator. In particular, diphenyl(2,4,6-trimethylbenzoyl)phosphine oxide can preferably be used.

The content of the photopolymerization initiator of the component (d) in the photocurable material of the present invention is preferably 0.2 parts by mass or more and 2 parts by mass or less, and more preferably 0.5 parts by mass or more and 1 part by mass or less, relative to 100 parts by mass of the total of the photopolymerizable acrylate monomer component of the component (a) and the photopolymerizable acrylate oligomer component of the component (b) described above when the photopolymerization initiator is a photoradical polymerization initiator. When the content thereof falls within such a range, it is possible to more effectively prevent insufficient curing at the time of light irradiation, and to more effectively prevent an increase in generation of outgas due to the polymerization reaction. One type of the photopolymerization initiator may be used alone, or two or more types thereof may be used in combination. When two or more types of the photopolymerization initiators are used in combination, the total amount thereof preferably satisfies the above-described range.

<Component (e)>

The photocurable material of the present invention contains, as the component (e), silica that has been hexadecylsilylated. By allowing the photocurable material to contain such silica, not only a predetermined thixotropic property can be realized in the photocurable material, but also transparency and moisture permeability of the cured product of the photocurable material can be prevented from being lowered.

The average particle diameter of such silica is preferably 7 nm or more and 40 nm or less, and more preferably 10 nm or more and 20 nm or less. This range is preferred because if the average particle diameter is too small, a risk of secondary aggregation in the photocurable material is increased, and if it is too large, there is a possibility that a sufficient thixotropic property cannot be imparted to the photocurable material. The average particle diameter can be measured using a commonly used laser diffraction particle size distribution analyzer.

The hexadecylsilylation treatment for the silica of the component (e) that has been subjected to a hexadecylsilylation treatment can be carried out according to a common method. For example, it is possible to carry out the hexadecylsilylation treatment by performing a polycondensation reaction of a silanol having a hexadecyl group to a hydroxyl group present on the surface of a silica filler having an untreated surface.

The BET specific surface area of the silica of the component (e) is preferably 100 $m^2/g$ or more and 300 $m^2/g$ or less, and more preferably 130 $m^2/g$ or more and 200 $m^2/g$ or less. This range is preferred because if the BET specific surface area thereof is too small, there is a possibility that a sufficient thixotropic property cannot be imparted to the photocurable material, and if it is too large, a risk of secondary aggregation in the photocurable material tends to become high. BET specific surface area can be measured by a so-called BET method.

The content of the silica of the component (e) in the photocurable material is preferably 5% by mass or more and 15% by mass or less, and more preferably 5% by mass or more and 10% by mass or less. This range is preferred because if the content is too small, a sufficient thixotropic property cannot be obtained, and if it is too large, there is a concern that the transparency of the cured product cannot be maintained.

<Thixotropic ratio of photocurable material>

In the photocurable material of the present invention, the thixotropic ratio defined below is 2 or more and 5 or less, and preferably 2.5 or more and 3.5 or less. This range is preferred because if the thixotropic ratio is too small, it becomes difficult to maintain the shape of the photocurable material, and if it is too large, a discharge property of the photocurable material from a dispenser or the like is reduced.

<Other components of photocurable material>

The photocurable material of the present invention can include, in addition to the above-mentioned components (a) to (e), a known additive for resin such as an antioxidant, a solvent, an ultraviolet absorber, a colorant, or an organic or inorganic filler within a range in which the advantageous effects of the present invention are not impaired.

(Viscosity and refractive index of photocurable material)

The photocurable material of the present invention is preferably in a liquid form at normal temperature for convenience during handling. For example, the viscosity at 25°C measured with a Brookfield viscometer is preferably 0.01 Pa·s or more and 100 Pa·s or less. Furthermore, the photocurable material preferably has a refractive index approximately equal to that of the image display panel or the front panel in order to prevent deterioration in the quality of a displayed image when applied to the image display device. For example, the refractive index is preferably 1.45 or more and 1.55 or less. With this property, the brightness and contrast of image light from the image display panel can be increased, thereby improving visibility.

(Mass% of each component in photocurable material)

Preferable blending amounts of the component (a) to the component (e) in the photocurable material of the present invention can be summarized as follows.
The component (a) in an amount of 25% by mass or more and 35% by mass or less;

the component (b) in an amount of 20% by mass or more and 30% by mass or less;
the component (c) in an amount of 40% by mass or more and 50% by mass or less;
the component (d) in an amount of 0.5 parts by mass or more and 1 part by mass or less relative to a total of 100 parts by mass of the component (a) and the component (b); and
the component (e) in an amount of 5% by mass or more and 10% by mass or less.

<Method for producing photocurable material>

The photocurable material of the present invention can be prepared by uniformly mixing the above-mentioned components according to a known mixing method.

<Photocured product of photocurable material>

Photocuring of the photocurable material of the present invention can be performed appropriately according to a known method depending on a polymerization method determined by each type of polymerization component and polymerization initiator. For a photocurable material having a thickness of 0.3 mm, photocuring can be usually performed by irradiating the photocurable material with ultraviolet rays using a metal halide lamp in a cumulative amount of light of 1,000 mJ/cm$^2$ or more and 5,000 mJ/cm$^2$ or less. In this case, the photocured product is obtained by curing the photocurable material so that the average reaction rate (curing rate) in the entire photocured product is 90% or more (preferably 97% or more). The reaction rate of the photocurable material in the entire photocured product means a reaction rate measured in the cured product, for example, formed into a film having a thickness of 0.3 mm.
Note that the reaction rate is a numeric value defined by a difference in the ratio of the amount of the (meth)acryloyl groups present after photocuring relative to the amount of the (meth)acryloyl groups present in the photocurable material before photocuring (consumption rate). A larger numeric value of the reaction rate indicates the further progression of the reaction. Specifically, the reaction rate can be calculated by substituting, into the following formula, an absorption peak height (X) at 1640 to 1620 cm$^{-1}$ from the baseline in the FT-IR measurement chart of the photocurable material before photocuring and an absorption peak height (Y) at 1640 to 1620 cm$^{-1}$ from the baseline in the FT-IR measurement chart of the photocurable material (photocured layer) after photocuring.

$$\text{Reaction rate (\%) = [(X - Y)/X]} \times 100$$

<Moisture permeability and light transmission property of photocured product of photocurable material>

(Moisture permeability)

The moisture permeability of the photocured product (thickness of 0.3 mm) of the photocurable material of the present invention, under an environment of 90% relative humidity at 40°C, is preferably 400 $g/m^2$/day or more, more preferably 500 $g/m^2$/day or more, still more preferably 600 $g/m^2$/day or more, and particularly preferably 700 $g/m^2$/day or more. However, from the viewpoint of preventing deterioration over time, it is preferably not more than 1,000 $g/m^2$/day. Note that the moisture permeability can be measured in an atmosphere of 40°C and 90% relative humidity according to JIS Z 0208. When the photocurable material that provides a photocured product having such a moisture permeability is applied to the transparent resin layer 5 in the image display device 10 in Figs 1 and 2, the polarizing plate 7 can be prevented from discoloration.

(Transparency)

The transparency of the photocured product of the photocurable material is evaluated by a light transmission property. In the present invention, the light transmittance in the visible light region is preferably 90% or more. With this property, when the cured resin layer is formed, the visibility of the image formed on the image display panel can be further improved. The light transmittance can be measured using a commonly used spectrophotometer.

<Image display device>

The photocurable material of the present invention can be preferably adopted as a material for forming the dam portion 3 (3a, 3b) in the image display device 10. The image display device 10 is considered such that the image display panel 1 and the front panel 2 are layered via the transparent resin layer 5 composed of the fill portion 4 and the dam portion 3 (dam portions 3a and 3b in a case where the metal bezel 6 is disposed), which surrounds the outer periphery of the fill portion 4, as shown in Fig. 1 or Fig. 2. The polarizing plate 7 is disposed on the surface of the image display panel 1 that is in contact with the transparent resin layer 5. This image display device 10 is also one aspect of the present invention. Note that the image display device 10 of the present invention is not limited to the aspects in Fig. 1 and Fig. 2.

That is, the image display device 10 of the present invention is characterized in that the dam portion 3 of the transparent resin layer 5 is obtained by photocuring the photocurable material which includes the following component (a) to component (e) and has a thixotropic ratio of 2 or more and 5 or less. Herein, the thixotropic ratio is a numeric value obtained by, when a viscosity is measured using a Brookfield viscometer, dividing the viscosity at a rotational speed of 1 rpm at 25°C by the viscosity at a rotational speed of 10 rpm at 25°C. These features have already been described in relation to the photocurable material of the present invention.

The component (a) being a photopolymerizable acrylate monomer component including a hydroxy group-containing (meth)acrylate monomer;

the component (b) being a photopolymerizable acrylate oligomer component including a (meth)acrylate oligomer having a relative dielectric constant of 4.0 or more at 100 kHz;
the component (c) being a plasticizer;
the component (d) being a photopolymerization initiator; and
the component (e) being hexadecylsilylated silica.

Furthermore, in the image display device 10 of the present invention, the fill portion 4 constituting the transparent resin layer 5 is preferably obtained by photocuring a photocurable composition including the component (a), the component (b), the component (c), and the component (d) described above. The photocurable composition is the same as the photocurable material constituting the dam portion 3 except that the photocurable composition does not include the component (e). This similarity makes it possible to provide good adhesion between the fill portion 4 and the dam portion 3 and to prevent a reduction in the transparency at the boundary.

(Image display panel 1)

Examples of the image display panel 1 constituting the image display device 10 of the present invention include a liquid crystal display panel, an organic EL display panel, and a touch panel. The touch panel described herein refers to an image display and input panel in which a display element such as a liquid crystal display panel is integrated with a position input device such as a touch pad.

(Front panel 2)

The front panel 2 constituting the image display device 10 of the present invention functions as a protective panel of the image display panel 1. Examples of the front panel 2 include a plate-like material and a sheet-like material that are composed of glass, an acrylic resin, a polyethylene terephthalate, a polyethylene naphthalate, a polycarbonate or the like. These materials may be subjected to a hard coat treatment, an antireflection treatment, or the like on one side or both sides. Physical properties such as thickness and elastic modulus of the front panel 2 can be appropriately determined according to the purpose of use. Note that the front panel 2 includes not only the member having a relatively simple configuration as described above, but also, similar to a touch panel module, a layered body of various sheets or film materials.
A light-shielding layer (not shown) may be provided on a peripheral part of the front panel 2 in order to improve contrast of an image. The light-shielding layer can be formed, for example, by applying a coating material colored in black or the like using a screen printing method or the like, and subsequently drying and curing. The thickness of the light-shielding layer is usually 5 to 100 $\mu$m.

(Transparent resin layer 5)

The transparent resin layer 5 of the image display device 10 of the present invention, which separates the image display panel 1 and the front panel 2, preferably has a moisture permeability of 400 g/m$^2$/day or more at a thickness of 0.3 mm, under an environment of 40°C and 90% relative humidity. A preferable range of the moisture permeability of the transparent resin layer 5 is the same as the range of the moisture permeability of the photocured product of the photocurable material of the present invention described above. This transparent resin layer 5 is composed of the dam portion 3 (3a, 3b) and the fill portion 4 that is surrounded by the dam portion. The dam portion 3 (3a, 3b) is formed from the photocured product of the photocurable material of the present invention having a thixotropic property. The dam portion 3 (3a, 3b) has a shape retention property even before photocuring. Thus, even if the photocurable composition fills, in order to form the fill portion 4, a region surrounded by the dam portion 3 (3a, 3b) that is not yet photocured, the photocurable composition can be prevented from flowing out to the outside of the dam portion 3 (3a).

(Dam portions 3, 3a, and 3b)

The dam portion 3 (3a) is provided on the outer periphery of the image display panel, and the fill portion 4 is filled inside the dam portion 3 (3a). The dam portion 3 (3a) is usually a continuous structure having a width of 0.3 mm or more and 3 mm or less and a height of 0.1 mm or more and 2 mm or less. Furthermore, in a case where the metal bezel 6 is provided on an outer edge of the image display panel 1, the dam portion 3b is provided on a boundary between the metal bezel 6 and the polarizing plate 7 usually as a continuous structure having a width of 0.3 mm or more and 3 mm or less and a height of 0.1 mm or more and 2 mm or less.

(Fill portion 4)

The fill portion 4 is a main body of the transparent resin layer 5 and is provided inside the dam portion 3 (3a, 3b). As described above, the fill portion 4 is obtained by photocuring the photocurable composition including the component (a), the component (b), the component (c), and the component (d), these being components excluding the component (e) .

(Metal bezel 6)

The metal bezel 6 functions as a fixing frame for the polarizing plate 7 provided on the surface of the image display panel 1 and is formed from stainless steel or the like. The width of the metal bezel 6 is usually 2 mm or more and 10 mm or less, and the thickness of the metal bezel 6 is usually 1 mm or more and 3 mm or less.

(Polarizing plate 7)

The polarizing plate 7 has a structure in which a polarizer (not shown) is sandwiched between a pair of protective layers (not shown). An adhesive may be used for sandwiching the polarizer. Furthermore, the polarizing plate 7 may additionally include other optical layers (e.g., a retardation plate) other than the polarizer and the protective layer. The thickness of the polarizing plate 7 is usually 0.1 mm or more and 0.3 mm or less.

As the polarizer, for example, a polarizer having a known configuration obtained by subjecting a polyvinyl alcohol-based resin to a dyeing treatment with a dichroic substance (e.g., an iodine compound) and a stretching treatment can be used.

As the protective layer sandwiching the polarizer, for example, a film made from a thermoplastic resin excellent in transparency, mechanical strength, thermal stability, a moisture barrier property, isotropy, and the like can be used. Examples of such a thermoplastic resin include a cellulose resin such as triacetyl cellulose (TAC), a polyester resin such as a polyethylene terephthalate (PET) and a polyethylene naphthalate (PEN), a polyethersulfone resin, a polysulfone resin, a polycarbonate resin, a polyamide resin, a polyimide resin, a polyolefin resin, a (meth)acrylic resin, a cyclic polyolefin resin, a polyarylate resin, a polystyrene resin, a polyvinyl alcohol resin, and a mixture thereof.

<Production method of image display device>

The image display device of the present invention shown in Fig. 1 can be produced as described below.

First, the polarizing plate is placed on one side of the image display panel according to a conventional method, and the photocurable material of the present invention is applied, in a dam shape, around the polarizing plate using a dispenser or the like. The photocurable material is semi-cured by ultraviolet ray irradiation to form a photocurable dam.

Next, the photocurable composition for forming the fill portion is applied to a region that is surrounded by the photocurable dam using a dispenser or the like and then dried to form a photocurable resin layer.

Next, the front panel is layered on top of the photocurable resin layer.

Subsequently, the photocurable resin layer is irradiated with ultraviolet rays through the front panel to be photocured, thereby forming a photocured transparent resin layer. As a result, the image display device in Fig. 1 is obtained.

Furthermore, the image display device of the present invention shown in Fig. 2 can be produced as described below.

First, the metal bezel and the polarizing plate are placed on one side of the image display panel according to a conventional method, and the photocurable material of the present invention is applied to the boundary between the metal bezel and the polarizing plate and the periphery of the metal bezel using a dispenser or the like. Then, the photocurable material is semi-cured by ultraviolet ray irradiation to form two photocurable dams.

Next, the photocurable composition for forming the fill portion is applied to a region that is surrounded by the two photocurable dams using a dispenser or the like and then dried to form a photocurable resin layer.

Next, the front panel is layered on top of the photocurable resin layer.

Subsequently, in order to be photocured, the photocurable resin layer is irradiated with ultraviolet rays through the front panel, thereby forming a photocured transparent resin layer. As a result, the image display device in Fig. 2 is obtained.

[Examples]

Hereinafter, the present invention will be specifically described with reference to Examples and Comparative Examples. Compounds used in the following Examples and Comparative Examples are as follows.

Component (a) Photopolymerizable acrylate monomer component

  * 4-hydroxybutyl acrylate (4-HBA)
  * Lauryl acrylate (LA)
  * Nonylphenol ethylene oxide modified (n = 1) acrylate (Aronix M-111, Toagosei Co., Ltd.)

Component (b) Photopolymerizable acrylate oligomer component

* Polyether-based urethane acrylate oligomer (UV3700B, Mitsubishi Chemical Corporation) (relative dielectric constant at 100 kHz = 5.3)
Component (c) Plasticizer
* Polyether polyol (P-3000, ADEKA CORPORATION)

Component (d) Photopolymerization initiator

* Diphenyl(2,4,6-trimethylbenzoyl)phosphine oxide (Omnirad TPO H, IGM Resins B.V.)

Component (e) Silica

* Silica 1 Un-hydrophobized fumed silica used in Comparative Example 1 (AEROSIL FWCJ, Evonik Japan Co., Ltd.), average primary particle diameter of 7 nm or more and 40 nm or less (The following silicas 2, 4, and 5 are obtained by hydrophobizing the silica 1, and are all available from Evonik Japan Co., Ltd., and silica 3 is available from Cabot Japan K.K.)
* Silica 2 Surface-treated silica used in Comparative Example 2 (AEROSIL R974 (methylsilylation treatment))
* Silica 3 Surface-treated silica used in Comparative Example
3 (CAB-O-SIL TS720 (dimethylsilylation treatment))
* Silica 4 Surface-treated silica used in Comparative Example
4 (AEROSIL R711 (methacrylsilylation treatment))
* Silica 5 Surface-treated silica used in Example 1 (AEROSIL VPNKC130 (hexadecylsilylation treatment)

(Other components)

Antioxidant: Irganox 1520L, BASF Japan Ltd.
UV absorber : Tinuvin PS, BASF Japan Ltd.

Example 1, Comparative Examples 1 to 4, and Reference Example 1

(Preparation of photocurable material for dam portion)

A photocurable material for a dam portion was prepared by uniformly mixing the following components. As Reference Example 1, a photocurable material for a dam portion without using silica as the component (e) was prepared.

<Component (a)>

4-Hydroxybutylacrylate as a photopolymerizable acrylate monomer component in an amount of 5.9 parts by mass, lauryl acrylate in an amount of 5 parts by mass, and nonylphenol ethylene oxide modified (n = 1) acrylate in an amount of 13.4 parts by mass;

<Component (b)>

Polyether-based urethane acrylate oligomer as a photopolymerizable acrylate oligomer component in an amount of 27.2 parts by mass;

<Component (c)>

Polyether polyol as a plasticizer in an amount of 45 parts by mass;

<Component (d)>

Diphenyl(2,4,6-trimethylbenzoyl)phosphine oxide as a photopolymerization initiator in an amount of 0.5 parts by mass;

<Component (e)>

Silica in Table 1 in an amount of 6 parts by mass;

<Antioxidant>

Irganox 1520L in an amount of 0.2 parts by mass; and

<UV absorber>

Tinuvin PS in an amount of 0.2 parts by mass.

(Preparation of photocurable material for fill portion)

A photocurable composition for a fill portion was prepared in the same manner as that for the photocurable material for a dam portion except that the silica of the component (e) was not used.

<Measurement of thixotropic property of photocurable material for dam portion>

For each photocurable material for a dam portion, a viscosity was measured by using a Brookfield viscometer (trade name: HAAKE RheoStress 600, manufactured by Thermo Electron Corporation), and a numeric value was obtained as a thixotropic ratio by dividing the viscosity at a rotational speed of 1 rpm at 25°C by the viscosity at a rotational speed of 10 rpm at 25°C. The numeric values are shown in Table 1. The thixotropic ratio of 3 or more was evaluated as very good (AA), 2.5 or more and less than 3 as good (A), 1.5 or more and less than 2.5 as fair (B), and less than 1.5 as poor (C).

<Light transmission property of cured product of photocurable material for dam portion>

Each photocurable material for a dam portion was applied onto a release polyethylene terephthalate (release PET) film using a dispenser so that the thickness after curing became 0.5 mm. Then, the photocurable material was irradiated with ultraviolet rays in the cumulative amount of light of 5,000 mJ/cm$^2$ to obtain a cured product layer. This cured product layer was peeled off from the release PET film, and the haze value of the cured product layer was measured using a haze meter. The haze value of less than 0.5 was evaluated as very good (AA), 0.5 or more and less than 1 as good (A), 1 or more and less than 1.5 as fair (B), and 1.5 or more as poor (C).

<Moisture permeability of cured product of photocurable material for dam portion>

The moisture permeability of a cured product of each photocurable material for a dam portion was measured according to the moisture permeability test (a water vapor transmission dish method) of JIS Z 0208. Specifically, the photocurable material for a dam portion was irradiated with ultraviolet rays in the cumulative amount of light of 5,000 mJ/cm$^2$ to prepare a cured resin layer with a thickness of 0.3 mm. This cured resin layer was set to a dish containing calcium chloride, placed in a constant humidity chamber at 40°C and 90% relative humidity, and left for 24 hours. Then, the weight increase of calcium chloride was measured to determine the moisture permeability of the cured resin layer. The moisture permeability of 1,000 g/m$^2$/day or more was evaluated as very good (AA), 500 g/m$^2$/day or more and less than 1,000 g/m$^2$/day as good (A), 100 g/m$^2$/day or more and less than 500 g/m$^2$/day as fair (B), and less than 100 g/m$^2$/day as poor (C).

<Presence or absence of discoloration of polarizing plate in image display device>

(Production of image display device)

A polarizing plate (manufactured by Polatechno Co., Ltd.) in which an 80-μm-thick triacetylcellulose layer, a 30-μm-thick polyvinyl alcohol layer, an 80-μm-thick triacetylcellulose layer, and a 25-μm-thick acrylic pressure-sensitive adhesive layer were layered in this order was prepared. The pressure-sensitive adhesive layer of this polarizing plate was adhered to a 1.1-mm-thick glass base plate as a substitute for the image display panel. Next, after applying the photocurable material for a dam portion to an outer periphery of the polarizing plate on the glass base plate using a dispenser so that the width became 3 mm and the height became 0.3 mm after curing, the curable material for a fill portion was applied to the fill portion that was surrounded by the dam portion using a dispenser so that the thickness became 0.3 mm after curing. A front glass plate having a thickness of 1.1 mm, which was a substitute for the front panel, was adhered onto the applied film to obtain a glass bonded body.

The obtained glass bonded body (corresponding to a precursor of a substitute for the image display device) was irradiated with ultraviolet rays from the front glass plate side of the glass bonded body in the cumulative amount of light of 5,000 mJ/cm$^2$ to cure the photocurable material, thereby forming a transparent resin layer. As a result, an image display device for testing shown in Fig. 1 was obtained. The FT-IR analysis confirmed that the reaction rate of the transparent resin layer was 90% or more.

(Presence or absence of discoloration of polarizing plate)

The image display device for testing was left under an environment of 100°C for 240 hours. The presence or absence of discoloration of the polarizing plate in the image display device after being left for 240 hours was visually examined. When it was determined that there was no discoloration of the polarizing plate, the polarizing plate was evaluated as good and described as "No discoloration" in Table 1. On the other hand, when it was determined that the polarizing plate was discolored, the polarizing plate was evaluated as poor and described as "Discoloration" in Table 1.

[Table 1]

| | Example | Comparative Example | | | | Reference Example |
|---|---|---|---|---|---|---|
| | 1 | 1 | 2 | 3 | 4 | 1 |
| Silica Type | Silica 5 Hexadecylsilylation Treatment | Silica 1 No Hydrophobization Treatment | Silica 2 Methylsilylation Treatment | Silica 3 Dimethylsilylation Treatment | Silica 4 Methacrylsilylation Treatment | No Silica |
| Thixotropic Ratio | AA (3.3) | B (2.1) | C (1.1) | B (2.4) | B (1.5) | C |
| Transparency | AA (0.43) | B (1.44) | AA (0.4) | C (4.95) | C (1.74) | - |
| Moisture Permeability | AA (1400) | AA (1450) | AA (1420) | AA (1400) | AA (1400) | - |
| Discoloration of Polarizing Plate | No Discoloration | No Discoloration | No Discoloration | No Discoloration | No Discoloration | - |

EP 4 324 855 A1

EP 4 324 855 A1

(Discussion of evaluation results)

The photocurable material of Comparative Example 1, in which silica not being subjected to the hydrophobization treatment was used, contained the constituent resin component that had the good moisture permeability. Thus, when the image display device was assembled, no discoloration of the polarizing plate was observed. However, the photocurable material of Comparative Example 1 was evaluated as B for the thixotropic ratio and was also evaluated as B for the transparency.

The photocurable material of Comparative Example 2, in which silica subjected to the methylsilylation treatment was used as the hydrophobized silica, contained the constituent resin component that had the good moisture permeability as in Comparative Example 1. Thus, when the image display device was assembled, no discoloration of the polarizing plate was observed, and the photocurable material of Comparative Example 2 was evaluated as AA for the transparency while it was evaluated as C for the thixotropic ratio.

The photocurable material of Comparative Example 3, in which silica subjected to the dimethylsilylation treatment was used as the hydrophobized silica, contained the constituent resin component that had the good moisture permeability as in Comparative Example 1. Thus, when the image display device was assembled, no discoloration of the polarizing plate was observed. However, the photocurable material of Comparative Example 3 was evaluated as B for the thixotropic ratio and was evaluated as C for the transparency.

The photocurable material of Comparative Example 4, in which silica subjected to the methacrylsilylation treatment was used as the hydrophobized silica, contained the constituent resin component that had the good moisture permeability as in Comparative Example 1. Thus, when the image display device was assembled, no discoloration of the polarizing plate was observed. However, the photocurable material of Comparative Example 4 was evaluated as B for the thixotropic ratio and was evaluated as C for the transparency.

Note that the photocurable material of Reference Example 1 was evaluated as C for the thixotropic ratio, because silica was not used. Therefore, each item of transparency, moisture permeability, and discoloration of a polarizing plate was not evaluated.

Reference Signs List

1      image display panel

2          front panel
3, 3a, 3b   dam portion
4          fill portion
5          transparent resin layer
6          metal bezel
7          polarizing plate
10         image display device

**Claims**

1.  A photocurable material for forming a dam portion of an image display device in which an image display panel and a front panel are layered via a transparent resin layer composed of a fill portion and the dam portion surrounding an outer periphery of the fill portion, the photocurable material comprising the following component (a) to component (e):

    a component (a) being a photopolymerizable acrylate monomer component including a hydroxy group-containing (meth)acrylate monomer;
    a component (b) being a photopolymerizable acrylate oligomer component including a (meth)acrylate oligomer having a relative dielectric constant of 4.0 or more at 100 kHz;
    a component (c) being a plasticizer;
    a component (d) being a photopolymerization initiator; and
    a component (e) being hexadecylsilylated silica,
    the photocurable material having a thixotropic ratio of 2 or more and 5 or less, where the thixotropic ratio is a numeric value obtained by, when a viscosity is measured using a Brookfield viscometer, dividing a viscosity at a rotational speed of 1 rpm at 25°C by a viscosity at a rotational speed of 10 rpm at 25°C.

2. The photocurable material according to claim 1, wherein the hydroxy group-containing (meth)acrylate monomer in the component (a) is 4-hydroxybutyl (meth)acrylate.

3. The photocurable material according to claim 1 or 2, wherein a content of the hydroxy group-containing (meth)acrylate monomer in the photopolymerizable acrylate monomer component of the component (a) is 25% by mass or more and 100% by mass or less.

4. The photocurable material according to any one of claims 1 to 3, wherein the (meth)acrylate oligomer having a relative dielectric constant of 4.0 or more at 100 kHz in the component (b) is a bifunctional polyether-based urethane acrylate oligomer.

5. The photocurable material according to any one of claims 1 to 4, wherein a content of the (meth)acrylate oligomer having a relative dielectric constant of 4.0 or more at 100 kHz in the photopolymerizable acrylate oligomer component of the component (b) is 20% by mass or more and 40% by mass or less.

6. The photocurable material according to any one of claims 1 to 5, wherein the plasticizer of the component (c) is a polyether-based polyol or a polyester-based polyol.

7. The photocurable material according to claim 6, wherein the polyether-based polyol is a polypropylene glycol.

8. The photocurable material according to any one of claims 1 to 7, wherein the photopolymerization initiator of the component (d) is a photoradical polymerization initiator.

9. The photocurable material according to claim 8, wherein the photoradical polymerization initiator is diphenyl(2,4,6-trimethylbenzoyl)phosphine oxide.

10. The photocurable material according to any one of claims 1 to 9, wherein the hexadecylsilylated silica of the component (e) has an average particle diameter of 7 nm or more and 40 nm or less.

11. The photocurable material according to any one of claims 1 to 10, wherein blending amounts of the component (a) to the component (e) are the following ranges:

    the component (a) in an amount of 25% by mass or more and 35% by mass or less;
    the component (b) in an amount of 20% by mass or more and 30% by mass or less;
    the component (c) in an amount of 40% by mass or more and 50% by mass or less;
    the component (d) in an amount of 0.5 parts by mass or more and 1 part by mass or less relative to a total of 100 parts by mass of the component (a) and the component (b); and
    the component (e) in an amount of 5% by mass or more and 10% by mass or less.

12. An image display device in which an image display panel and a front panel are layered via a transparent resin layer composed of a fill portion and a dam portion surrounding an outer periphery of the fill portion, wherein
    the dam portion is obtained by photocuring a photocurable material, the photocurable material comprising the following component (a) to component (e):

    a component (a) being a photopolymerizable acrylate monomer component including a hydroxy group-containing (meth)acrylate monomer;
    a component (b) being a photopolymerizable acrylate oligomer component including a (meth)acrylate oligomer having a relative dielectric constant of 4.0 or more at 100 kHz;
    a component (c) being a plasticizer;
    a component (d) being a photopolymerization initiator; and
    a component (e) being hexadecylsilylated silica,
    the photocurable material having a thixotropic ratio of 2 or more and 5 or less, where the thixotropic ratio is a numeric value obtained by, when a viscosity is measured using a Brookfield viscometer, dividing a viscosity at a rotational speed of 1 rpm at 25°C by a viscosity at a rotational speed of 10 rpm at 25°C.

13. The image display device according to claim 12, wherein the fill portion is obtained by photocuring a photocurable composition including the component (a), the component (b), the component (c), and the component (d).

# Fig. 1

# Fig. 2

## INTERNATIONAL SEARCH REPORT

| International application No. |
| --- |
| **PCT/JP2022/017677** |

**A.    CLASSIFICATION OF SUBJECT MATTER**

*C08F 2/44*(2006.01)i; *C08F 2/50*(2006.01)i; *C08F 290/06*(2006.01)i; *G02F 1/1339*(2006.01)i; *G09F 9/30*(2006.01)i
FI:    C08F2/44 Z; C08F2/50; C08F290/06; G02F1/1339 505; G09F9/30 309

According to International Patent Classification (IPC) or to both national classification and IPC

**B.    FIELDS SEARCHED**

Minimum documentation searched (classification system followed by classification symbols)

C08F2/44; C08F2/50; C08F290/06; G02F1/1339; G09F9/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2021-21012 A (AICA KOGYO CO., LTD.) 18 February 2021 (2021-02-18)<br>entire text | 1-13 |
| A | WO 2019/038955 A1 (PANASONIC INTELLECTUAL PROPERTY MANAGEMENT CO., LTD.) 28 February 2019 (2019-02-28)<br>entire text | 1-13 |
| P, A | JP 2021-134327 A (AICA KOGYO CO., LTD.) 13 September 2021 (2021-09-13)<br>entire text | 1-13 |
| P, A | JP 2022-48097 A (KYORITSU KAGAKU SANGYO KK) 25 March 2022 (2022-03-25)<br>entire text | 1-13 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 June 2022** | **19 July 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/017677**

| Patent document cited in search report | | | Publication date (day/month/year) | Patent family member(s) | | | Publication date (day/month/year) |
|---|---|---|---|---|---|---|---|
| JP | 2021-21012 | A | 18 February 2021 | (Family: none) | | | |
| WO | 2019/038955 | A1 | 28 February 2019 | US entire text EP | 2020/0150718 3674784 | A1 A1 | |
| JP | 2021-134327 | A | 13 September 2021 | US entire text | 2021/0269632 | A1 | |
| JP | 2022-48097 | A | 25 March 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013088455 A
- JP 2018 A

- JP 021962 A